# EUROPÄISCHE PATENTANMELDUNG

(11) **EP 4 331 941 A1**
(43) Veröffentlichungstag der Anmeldung: **06.03.2024**
(21) Anmeldenummer: 23191492.0
(22) Anmeldetag: 15.08.2023
(51) Int. Cl.: B61L 15/00, H04L 45/85, H04L 49/00, H04L 49/40, H04L 69/22, H04B 1/3822

(54) **ADAPTERVORRICHTUNG UND SYSTEM ZUR TELEKOMMUNIKATION**

(30) Priorität: 29.08.2022 DE 202022104864 U
(71) Anmelder: Funkwerk Systems GmbH, 99625 Kölleda (DE)
(72) Erfinder: PORSCH, Lutz, 99610 Sömmerda (DE); STÖPEL, Uwe, 99625 Kölleda (DE); VOIGT, Thomas, 99867 Gotha (DE)
(74) Vertreter: Gleim Petri Patent- und Rechtsanwaltspartnerschaft mbB

(57) **Zusammenfassung**

Die Erfindung betrifft eine Adaptervorrichtung (1) zum Verbinden mehrerer Modems mit einem Bordcomputer, die eine erste Schnittstelle (2) für ein erstes Modem eines ersten Funkstandards, eine zweite Schnittstelle (3) für ein zweites Modem eines zweiten Funkstandards, eine dritte Schnittstelle (4) für den Bordcomputer, und eine mit der ersten, zweiten und dritten Schnittstelle (2, 3, 4) verbundene Schalteinheit (5), welche Daten von dem Bordcomputer über die dritte Schnittstelle (4) erhält, umfasst. Um eine Adaptervorrichtung (1) bereitzustellen, welche auf einfachem Wege eine Kompatibilität von Bordcomputern in Bestandszügen mit den neueren Übertragungsstandards 4G und 5G herstellt, ohne umfassende Änderungen an dem Bordcomputer vornehmen zu müssen, ist die Schalteinheit (5) dazu ausgebildet, die Daten von der dritten Schnittstelle (4) an der ersten Schnittstelle (2) auszugeben, wenn die Daten für das erste Modem bestimmt sind und die Daten von der dritten Schnittstelle (4) an der zweiten Schnittstelle (3) auszugeben, wenn die Daten für das zweite Modem bestimmt sind. Ferner umfasst die Erfindung ein System zur Telekommunikation in einem Schienennetz sowie ein zugehöriges Verfahren.

## Beschreibung

### Technisches Gebiet der Erfindung

Die Erfindung betrifft eine Adaptervorrichtung zum Verbinden mehrerer Modems mit einem Bordcomputer, die eine erste Schnittstelle für ein erstes Modem eines ersten Funkstandards, eine zweite Schnittstelle für ein zweites Modem eines zweiten Funkstandards, eine dritte Schnittstelle für den Bordcomputer, und eine mit der ersten, zweiten und dritten Schnittstelle verbundene Schalteinheit, welche Daten von dem Bordcomputer über die dritte Schnittstelle erhält, umfasst.

Ferner betrifft die Erfindung ein System zur Telekommunikation in einem Schienennetz, welches ein erstes Modem eines ersten Funkstandards, ein zweites Modem eines zweiten Funkstandards, einen Bordcomputer und eine Schalteinheit, die den Bordcomputer mit dem ersten Modem und dem zweiten Modem verbindet, umfasst.

### Stand der Technik

Der Mobilfunk ist ein sich schnell wandelnder Markt, in dem sich verschiedene (Mobil-)Funkstandards in kurzer Zeit ablösen. Dies stellt für Anlagen mit langer Lebensdauer regelmäßig ein Problem dar, da diese nachgerüstet und an den aktuellen Funkstandard angepasst werden müssen. So wurde im Bahnbereich bisher der Funkstandard der zweiten Generation (2G bzw. GSM) verwendet. Dieser wird auch weiterhin für reguläre Telefonie genutzt, ist für die Datenübertragung jedoch aufgrund seiner geringen Geschwindigkeit für zukünftige Anwendungen nicht mehr nutzbar. Abgelöst wurde der 2G-Standard vom heutzutage bereits obsoleten 3G-Standard, welcher die Datenübertragung um ein Vielfaches verbessert hatte. Heutzutage werden aber bereits der 4G-Standard (LTE) und zunehmend auch der 5G-Standard eingesetzt, welche ein Vielfaches an Daten in der gleichen Zeit übertragen können. Während mit dem 2G-Standard höchstens 256 kbit/s übertragen werden konnten, sind bei 4G bis zu 1Gbit/s, bei 5G sogar bis zu 10 Gbit/s möglich.

Züge haben typischerweise einen langen Lebenszyklus, Funkstandards hingegen haben sich in den letzten Jahren teils drastisch gewandelt. Dadurch sind die Bordcomputer regelmäßig veraltet und können neuere Funkstandards nicht ohne Anpassungen der Hardware und der Software unterstützen. Erschwerend kommt hinzu, dass eisenbahntypische Schnittstellen existieren, die wiederum speziell angepasste, externe Komponenten, also auch Modems, notwendig machen. Gerade in älteren Zügen sind Bordcomputer verbaut, die ausschließlich den Funkstandard 2G verarbeiten können, für 4G oder 5G jedoch weder geeignete Hardware noch Software aufweisen. Bei der Modernisierung des Schienennetzes besteht aber die Notwendigkeit ebendiese modernen Standards zu berücksichtigen.

Aus dem Stand der Technik sind verschiedene Ansätze bekannt, eine Kompatibilität der Systeme herzustellen. Ein Beispiel dafür ist in der EP 3 742 550 A1 offenbart, wo über eine Multibandantenne verschiedene Funkstandards vereint werden, die auf einem Zug befestigt wird. Jedem Funkstandard ist dabei eine oder mehrere einer Vielzahl von Antennen zugeordnet, z.B. für 4G und GSM-R. Der Nachteil einer solchen Lösung ist, dass auch die Bordcomputer der Züge mit einer neuen Technologie ausgerüstet werden müssen.

### Beschreibung der Erfindung

Aufgabe der Erfindung ist es, eine Adaptervorrichtung und ein System bereitzustellen, welche auf einfachem Wege eine Kompatibilität von Bordcomputern in Bestandszügen mit den neueren Übertragungsstandards 4G und 5G herstellt, ohne umfassende Änderungen an dem Bordcomputer vornehmen zu müssen.

Die Aufgabe wird für die eingangs beschriebene Adaptervorrichtung dadurch gelöst, dass die Schalteinheit dazu ausgebildet ist, die Daten von der dritten Schnittstelle an der ersten Schnittstelle auszugeben, wenn die Daten für das erste Modem bestimmt sind und die Daten von der dritten Schnittstelle an der zweiten Schnittstelle auszugeben, wenn die Daten für das zweite Modem bestimmt sind. Auf diese Weise können Modems verschiedener Funkstandards miteinander kombiniert werden, ohne dass der Bordcomputer an die entsprechenden Funkstandards angepasst werden muss. Durch die erfindungsgemäße Adaptervorrichtung ist ein Softwareupdate des Bordcomputers ausreichend, da die nötige Hardware und die entsprechenden Schnittstellen durch die Adaptervorrichtung bereitgestellt werden.

Allgemein gibt es verschiede Möglichkeiten, eine Adaptereinheit umzusetzen. Sie kann analog wie auch digital arbeiten und entweder in der Nähe der Antennen oder direkt am Bordcomputer vorgesehen sein. In letzterem Fall kann es sich auch um eine Steckkarte oder ähnliches handeln, welche in den Bordcomputer eingesetzt wird. Die Schalteinheit selbst kann dabei als speziell angepasste Schaltung, Mikrochip, Rechner oder ähnliches ausgebildet sein.

Dabei ist es von Vorteil, wenn die Daten eine Signatur oder einem Header aufweisen, welcher von der Schalteinheit auslesbar ist, so dass eine Zuordnung der Daten zu dem ersten oder dem zweiten Modem erfolgen kann. Dies erleichtert ebendiese Zuordnung und die Adaptervorrichtung arbeitet schneller und effizienter.

Alternativ oder zusätzlich ist es von Vorteil, wenn die Schalteinheit dazu ausgebildet ist, die Daten entsprechend einem ersten oder einem zweiten Befehlssatz dem ersten oder dem zweiten Modem zuzuordnen. Die Adaptervorrichtung ist dabei so beschaffen, dass sie die Daten analysiert. Der erste und der zweite Befehlssatz sind dabei typisch für die jeweiligen Funkstandards, so dass eine Zuordnung zum jeweiligen Modem erfolgen kann. Vor allem in Kombination mit einem Header oder einer Signatur kann so eine noch sicherere Zuordnung, vor allem im Fall von möglicherweise auftretenden Übertragungsfehlern, gewährleistet werden.

Indem als erster Funkstandard 2G und als zweiter Funkstandard 4G oder 5G verwendet werden, ist die Adaptervorrichtung vorteilhaft an aktuell übliche Funkstandards angepasst.

Die Kompatibilität zum Bordcomputer wird verbessert, indem vorteilhaft die dritte Schnittstelle über einen C96-Steckverbinder verbunden ist und die erste sowie die zweite Schnittstelle jeweils für einen oder mehrere der Standards RS-232, RS-422 und/oder FRMCS ausgelegt sind.

Die Aufgabe wird außerdem für das eingangs beschriebene System dadurch gelöst, dass die Schalteinheit dazu ausgebildet ist, vom Bordcomputer ausgegebene Daten dem ersten oder dem zweiten Modem entsprechend einem Befehlssatz der Daten zuzuordnen und an das dem Befehlssatz entsprechende Modem zu übergeben. Da jedes Modem einem unterschiedlichen Funkstandard entspricht und daher mit individuell angepassten Befehlssätzen arbeitet, können die Daten anhand dieser Befehlssätze zugeordnet werden.

Auch für das System ist es vorteilhaft, wenn die Daten eine Signatur oder einen Header enthalten, wobei die Signatur oder der Header den Funkstandard angeben und von der Schalteinheit auslesbar sind, um die Zuordnung der Daten zu erleichtern.

Wie auch bei der Adaptervorrichtung ist es vorteilhaft, wenn der erste Funkstandard 2G und der zweite Funkstandard 4G oder 5G ist. Auf diese Weise kann das System an die aktuell gängigen Funkstandards angepasst werden.

Die Aufgabe wird ferner durch ein Computerprogramm gelöst, das Softwarebefehle aufweist, die, wenn sie von einem Rechner ausgeführt werden, den Rechner als die oben beschriebene Adaptervorrichtung oder eine gerade beschriebene Schalteinheit betreiben.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
Fig. 1 eine schematische Darstellung einer Adaptereinheit zum Verbinden mehrerer Modems mit einem Bordcomputer und
Fig. 2 eine Prinzipdarstellung eines Systems zur Telekommunikation in einem Schienennetz.

### Ausführliche Beschreibung der Zeichnungen

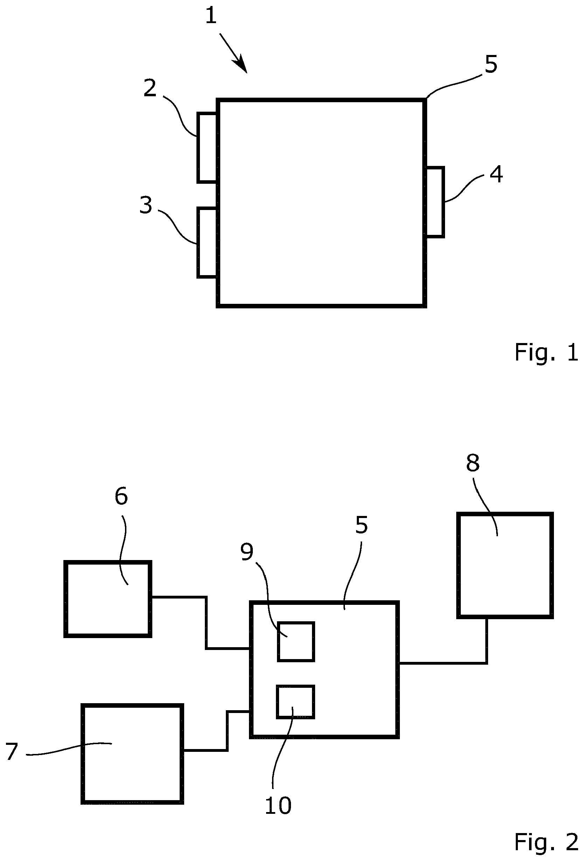

**Fig. 1** zeigt eine Adaptervorrichtung 1 zum Verbinden mehrerer Modems mit einem Bordcomputer. Die Adaptervorrichtung 1 umfasst eine erste Schnittstelle 2 für ein erstes Modem zum Empfangen und Senden von Funksignalen eines ersten Funkstandards, zum Beispiel 2G, eine zweite Schnittstelle 3 für ein zweites Modem zum Empfangen und Senden von Funksignalen eines zweiten Funkstandards, zum Beispiel 4G oder 5G, und eine dritte Schnittstelle 4 für einen Bordomputer. Mit der ersten, zweiten und dritten Schnittstelle 2, 3, 4 ist eine Schalteinheit 5 verbunden, welche Daten über eine der Schnittstellen 2, 3, 4 erhält oder sendet. Im Folgenden wird die Funktionsweise der Adaptervorrichtung 1 erläutert.

An der ersten Schnittstelle 2 eingehende Daten, welche von einem ersten Modem stammen, werden unverändert an der dritten Schnittstelle 4 bereitgestellt. An der zweiten Schnittstelle 3 eingehende Daten, welche von einem zweiten Modem stammen, werden von der Schalteinheit 5 ebenfalls an der dritten Schnittstelle 4 bereitgestellt. Dabei kann immer nur ein Weg aktiv, also entweder die erste Schnittstelle 2 mit der dritten Schnittstelle 4 oder die zweite Schnittstelle 3 mit der dritten Schnittstelle 4 verbunden sein.

Gehen an der dritten Schnittstelle 4 Daten ein, welche vom Bordcomputer ausgegeben werden, werden diese zunächst in der Schalteinheit 5 analysiert und entweder der ersten Schnittstelle 2 oder der zweiten Schnittstelle 3 zugeordnet. Die Daten werden direkt an der ersten Schnittstelle 2 bereitgestellt, wenn sie dem ersten Modem zuzuordnen sind. Sind sie dem zweiten Modem zuzuordnen, werden sie hingegen an der zweiten Schnittstelle 3 bereitgestellt.

Welcher der ersten oder zweiten Schnittstelle 2, 3 die Daten schließlich zugeordnet werden, leitet sich also daraus ab, welchem Modem sie zugeführt werden sollen. Dies stellt die Schalteinheit 5 fest, indem sie zum Beispiel eine Signatur oder einen Header analysiert, welche Teil eines Datenpaktes der Daten sind und diese Information enthalten. Alternativ oder zusätzlich kann der Funkstandard anhand eines Datenformats oder eines für das jeweilige Modem bzw. den jeweiligen Funkstandard spezifischen Befehlssatzes erkennbar sein. Im einfachsten Fall kann auch ein Schaltsignal an einer der Schnittstellen 2, 3, 4 bereitgestellt werden, welches auf die Schalteinheit 5 angepasst ist und welches ein Umschalten der Schalteinheit 5 bewirkt.

Typische Standards für die mit der ersten und der zweiten Schnittstelle 2, 3, verbundenen Modems sind dabei RS-232, RS-422 und/oder FRMCS. Dabei können die erste oder zweite Schnittstellen 2, 3 jeweils auch mehrere Standards bedienen, indem zum Beispiel jeweils mehrere, unterschiedliche Steckverbinder vorgesehen sind. Für bestmögliche Kompatibilität mit bereits vorhandenen Bordcomputern wird regelmäßig für die dritte Schnittstelle 4 ein C-96-Steckverbinder verwendet. Im Allgemeinen ist dies jedoch auch hier anwendungsspezifisch.

**Fig. 2** zeigt ein System zur Telekommunikation, bei welchem die Schalteinheit 5 fest installiert ist. Ein erstes Modem 6 zum Empfangen und Senden von Funksignalen eines ersten Funkstandards und ein zweites Modem 7 zum Empfangen und Senden von Funksignalen eines zweiten Funkstandards sind dabei direkt mit der Schalteinheit 5 verbunden. Für den konkreten Anwendungsfall der Telekommunikation in einem Schienennetz kann dabei der erste Funkstandard 2G und der zweite Funkstandard 4G oder 5G sein. Ein Bordcomputer 8 ist ebenfalls mit der Schalteinheit 5 verbunden. Das erste Modem 6, das zweite Modem 7 und der Bordcomputer 8 übermitteln über die jeweiligen Schnittstellen 2, 3, 4 Daten, welche über die Schalteinheit 5 zugeordnet und an den passenden Schnittstellen 2, 3, 4 bereitgestellt werden. Die Funktionsweise des Systems zur Telekommunikation wird im Folgenden näher erläutert.

Die Schalteinheit 5 weist einen Zuordnungsschaltkreis 9 auf, der vom Bordcomputer 8 ausgegebene Daten dem ersten Modem 6 oder dem zweiten Modem 7 entsprechend einem Funkstandard der Daten zuordnet und an das dem Funkstandard der Daten entsprechende Modem 6, 7 übergibt. Der Zuordnungsschaltkreis 9 nimmt außerdem von dem ersten Modem 6 übermittelte Daten oder von dem zweiten Modem 7 übermittelte Daten auf und übergibt sie an den Bordcomputer 8.

Die Schalteinheit 5 kann die Daten anhand einer Signatur oder eines Headers dem jeweiligen Modem 6, 7 zuordnen, wobei die Signatur oder der Header den Funkstandard angeben und von der Schalteinheit 5 auslesbar sind. In diesem Ausführungsbeispiel weist die Schalteinheit 5 jedoch einen Analyseschaltkreis 10 auf. Dieser kann die Daten anhand eines für den jeweiligen Funkstandard typischen Datenformats und/oder einem für den jeweiligen Funkstandard spezifischen Befehlssatz erkennen und die Schalteinheit 5 entsprechend schalten. Dies ist insbesondere dann notwendig, wenn der Bordcomputer 8 eine Verbindung zu einem der beiden Modems 6, 7 aufbaut.

Die Schalteinheit 5 kann analog oder digital arbeiten. Es kann sich dabei beispielsweise um einen entsprechend ausgelegten Rechner handeln, auf dem ein Computerprogramm läuft, mit dessen Hilfe der Rechner als Schalteinheit 5 betrieben wird. Dabei können insbesondere der Zuordnungsschaltkreis 9 und der Analyseschaltkreis 10 digital umgesetzt sein.

### Bezugszeichenliste

- 1: Adaptervorrichtung
- 2: erste Schnittstelle
- 3: zweite Schnittstelle
- 4: dritte Schnittstelle
- 5: Schalteinheit
- 6: erstes Modem
- 7: zweites Modem
- 8: Bordcomputer
- 9: Zuordnungsschaltkreis
- 10: Analyseschaltkreis

## Patentansprüche

1. Adaptervorrichtung zum Verbinden mehrerer Modems (6, 7) mit einem Bordcomputer (8), umfassend
- eine erste Schnittstelle (2) für ein erstes Modem (6) eines ersten Funkstandards,
- eine zweite Schnittstelle (3) für ein zweites Modem (7) eines zweiten Funkstandards,
- eine dritte Schnittstelle (4) für den Bordcomputer (8), und
- eine mit der ersten, zweiten und dritten Schnittstelle (2, 3, 4) verbundene Schalteinheit (5), welche Daten von dem Bordcomputer (8) über die dritte Schnittstelle (4) erhält,
- **dadurch gekennzeichnet, dass** die Schalteinheit (5) dazu ausgebildet ist, die Daten von der dritten Schnittstelle (4) an der ersten Schnittstelle (2) auszugeben, wenn die Daten für das erste Modem (6) bestimmt sind und
- die Daten von der dritten Schnittstelle (4) an der zweiten Schnittstelle (3) auszugeben, wenn die Daten für das zweite Modem (7) bestimmt sind.

2. Adaptervorrichtung nach Anspruch 1, **dadurch gekennzeichnet, dass** die Daten eine Signatur oder einen Header aufweisen, welcher von der Schalteinheit (5) auslesbar ist, so dass eine Zuordnung der Daten zu dem ersten oder dem zweiten Modem (7) erfolgen kann.

3. Adaptervorrichtung nach Anspruch 1 oder 2, **dadurch gekennzeichnet, dass** die Schalteinheit (5) dazu ausgebildet ist, die Daten entsprechend einem ersten oder zweiten Befehlssatz dem ersten bzw. dem zweiten Modem (6, 7) zuzuordnen.

4. Adaptervorrichtung nach einem der Ansprüche 1 bis 3, **dadurch gekennzeichnet, dass** der erste Funkstandard 2G und der zweite Funkstandard 4G oder 5G ist.

5. Adaptervorrichtung nach einem der Ansprüche 1 bis 4, **dadurch gekennzeichnet, dass** die dritte Schnittstelle (4) über einen C96-Steckverbinder verbunden ist und die die erste sowie die zweite Schnittstelle (2, 3) jeweils für einen oder mehrere der Standards RS-232, RS-422 und/oder FRMCS ausgelegt sind.

6. System zur Telekommunikation in einem Schienennetz, umfassend
- ein erstes Modem (6) eines ersten Funkstandards,
- ein zweites Modem (7) eines zweiten Funkstandards,
- einen Bordcomputer (8) und
- eine Schalteinheit (5), die den Bordcomputer (8) mit dem ersten Modem (6) und dem zweiten Modem (7) verbindet, **dadurch gekennzeichnet, dass**
- die Schalteinheit (5) dazu ausgebildet ist, vom Bordcomputer (8) ausgegebene Daten dem ersten Modem (6) oder dem zweiten Modem (7) entsprechend einem Befehlssatz der Daten zuzuordnen und an das dem Befehlssatz entsprechende Modem (6, 7) zu übergeben.

7. System nach Anspruch 6, **dadurch gekennzeichnet, dass** die Daten eine Signatur oder einen Header enthalten, wobei die Signatur oder der Header den Funkstandard angeben und von der Schalteinheit (5) auslesbar sind.

8. System nach Anspruch 6 oder 7, **dadurch gekennzeichnet, dass** die Schalteinheit (5) dazu ausgebildet ist, von dem ersten Modem (6) oder von dem zweiten Modem (7) an die Schalteinheit (5) übermittelte Daten zu analysieren und eine Verbindung zwischen dem Bordcomputer (8) und dem ersten Modem (6) oder dem zweiten Modem (7) anhand einer Priorität der übermittelten Daten auszuführen.

9. System nach einem der Ansprüche 6 bis 8, **dadurch gekennzeichnet, dass** der erste Funkstandard 2G und der zweite Funkstandard 4G oder 5G ist.

10. Computerprogramm, das Softwarebefehle aufweist, die, wenn sie von einem Rechner ausgeführt werden, den Rechner als Schalteinheit (5) gemäß einem der Ansprüche 1 bis 9 betreiben.

11. Verfahren zur Telekommunikation in einem Schienennetz, umfassend die folgenden Schritte:
- Empfangen von Daten eines Bordcomputers (8) durch eine Schalteinheit (5),
- Analyse der Daten in der Schalteinheit (5), ob die Daten einem ersten Modem (6) eines ersten Funkstandards oder einem zweiten Modem (7) eines zweiten Funkstandards zuzuordnen sind,
- Bereitstellen der Daten an einer ersten Schnittstelle (2), wenn die Daten dem ersten Modem (6) zuzuordnen sind und
- Bereitstellen der Daten an einer zweiten Schnittstelle (3), wenn die Daten dem zweiten Modem (7) zuzuordnen sind.

12. Verfahren nach Anspruch 11, wobei die Schalteinheit (5) die Daten der ersten und zweiten Schnittstelle (2, 3) zuordnet, indem sie eine Signatur oder einen Header eines Datenpakets der Daten analysiert.

13. Verfahren nach Anspruch 11 oder 12, wobei die Schalteinheit (5) den Funkstandard anhand eines Datenformats oder eines für den jeweiligen Funkstandard spezifischen Befehlssatzes bestimmt.

14. Verfahren nach einem der Ansprüche 11 bis 13, wobei ein Schaltsignal an einer der Schnittstellen (2, 3) oder von dem Bordcomputer (8) bereitgestellt wird, welches auf die Schalteinheit (5) angepasst ist und ein Umschalten der Schalteinheit (5) bewirkt.

15. Verfahren nach einem der Ansprüche 11 bis 14, wobei der erste Funkstandard 2G und der zweite Funkstandard 4G oder 5G ist.
